# EUROPEAN PATENT APPLICATION

(11) **EP 1 074 784 A1**
(43) Date of publication of application: **07.02.2001**
(21) Application number: 99115546.6
(22) Date of filing: 06.08.1999
(51) Int. Cl.: F16N 19/00, F01N 7/02

(54) **Automatic oil replenishment apparatus**

(71) Applicant: Chen, Fu-Chung, Tainan, Taiwan, R.o.C. (TW)
(72) Inventor: Chen, Fu-Chung, Tainan, Taiwan, R.o.C. (TW)
(74) Representative: Panten, Kirsten

(57) **Abstract**

An apparatus for automatically replenishing liquid oil into an operating machine is provided. The apparatus includes a transparent oil tank (10) in the upper portion, a transparent oil distributing case (30) in the lower portion and a passage (14) centrally formed in between. An injecting seat (60) is secured to the lower end of the passage (14). A check member (50) is slidably disposed in the upper end of the passage (14) and is biased by a spring (64) on the underside. An actuating rod (21) urges the check member (50) sliding downward to form a gap to permit the oil from the oil tank (10) flowing into the case via the injecting seat (60). An oil egress (371) in a lower peripheral wall of the case (30) for automatically replenishing the liquid oil into the machine. An air vent (381) is provided in an upper peripheral wall of the case (30) for the intake of atmospheric air. When the oil inside the case (30) reaches a lower limit line (302) air is kept out so as to stop the flow of the oil out of the oil tank (10).

## Description

The present invention relates to oil replenishment devices and more particularly to an automatic oil replenishment apparatus for automatically replenishing liquid oil into a machine in a predetermined quality.

For enabling a machine such as a decelerating gear box, a pump, a generator or a crank box of a reciprocating compressor to operate normally and for prolonging the service life of the machine, the lubricating or hydraulic oil is constantly provided. The liquid is generally contained in an oil container attached to the machine and provided with a visual window thereon through which the operator can observe the consumption of the liquid oil in the machine and replenish the oil in the container or render some manner to deal with it, because if the oil level in the machine is too high it will cause greater resistance in the mechanism or overheating so that the sealing rings might be damaged leading to an oil leak of the machine, and if the oil level is to low, the mechanism will be less lubricious and is eventually damaged. Therefore, this oil replenishing device has the following disadvantages:
a) at any time the operator has to watch the oil condition through the visual window. Any neglect of the operator may cause an accident as described above;
b) the liquid oil of high viscosity may create greasy spots on the inner wall of the machine box in addition to the residues and vapours of water that can not be seen through the visual window of the machine. Thus the machine is damageable while lubricated by the contaminated oil, and
c) the oil container for a compressor may be sealed off and some of the machinery have a pressure releasing design. So, the above described oil replenishing device cannot fulfil the requirements of these machines, especially because of the inside pressure variations during the operation of these machines.

Object of the present invention is to provide an automatic oil replenishment apparatus which can automatically replenish the liquid oil into an operating machine providing a predetermined oil level without frequent observation by the operator of the machine.

The object is accomplished by the automatic oil replenishment apparatus of claim 1.

Another object of the present invention is to provide an automatic oil replenishment apparatus including an oil tank and an oil distributing case of preferably rigid transparent material respectively. On the upper and lower portions of the apparatus there preferably are provided graduations and limit lines to facilitate the control of the oil level in the apparatus.

The automatic oil replenishment apparatus further comprises an oil passage between the oil tank and the oil distributing case. The passage is blocked by a check member which may be pushed by an actuating rod from the top of the oil tank in order to form a gap in between permitting the oil to flow out of the oil tank into the oil distributing case through an injecting seat.

Further, the automatic oil replenishment apparatus comprises an oil egress in a lower peripheral wall of the oil distributing case which is connected to an oil container of a machine for replenishing the oil into the container in a predetermined quality.

In the automatic oil replenishment apparatus an air vent is provided in an upper peripheral wall of the oil distributing case perpendicular to the oil egress for the intake of ambient air of normal atmospheric pressure into the apparatus for the balancing the pressure of the apparatus and the machine.

In the automatic oil replenishment apparatus a pressure balancing tube can be provided which is connected to the air vent for preventing the overflow of the oil in case that the oil may flow back into the oil distributing case during the stop of the machine.

Preferably, the automatic oil replenishment apparatus comprises a residues collecting tube centrally formed under the oil distributing case. Residues are releasable from the operable end of the tube.

The present invention will become more fully understood by reference to the following detailed description thereof when read in conjunction with the attached drawings.
Figure 1 is an exploded perspective view showing the preferred embodiment of the present invention,
Figure 2 is a sectional view showing the assemblage of Fig. 1,
Figure 3 is a sectional view of Fig. 2 illustrating that a gap is formed between the check member and the passage for permitting the liquid oil flowing from the oil tank into the oil distributing case,
Figure 4 is a sectional view indicating that the liquid stops to flow into the oil distributing case when the oil level in the case reaches a limit line,
Figure 5 is a sectional view of Fig. 2 inculcating an overflow of the liquid oil caused by a flowing back of the oil from the machine,
Figure 6 is a sectional view Fig. 2 illustrating that the air vent is blocked and the injecting seat is lowered to satisfy the requirements of a sealed off machine,
Figure 7 is a sectional view illustrating that a flexible tube is connected to the air vent and to an oil ingress of the machine for leading the oil back to the machine in case of an overflow in the oil distributing case, and
Figure 8 is a perspective view of the preferred embodiment of the present invention.

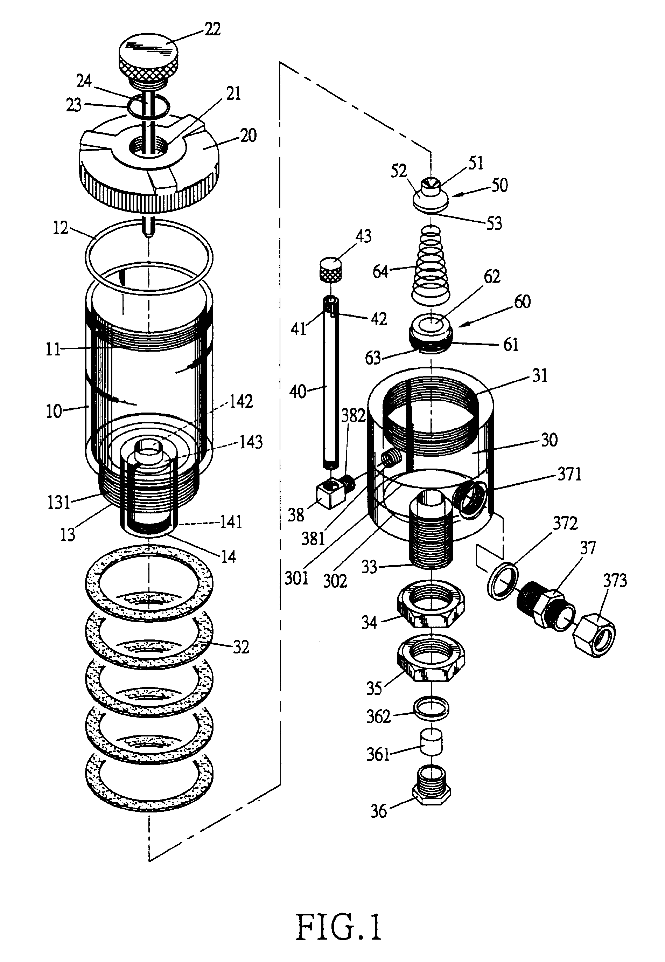

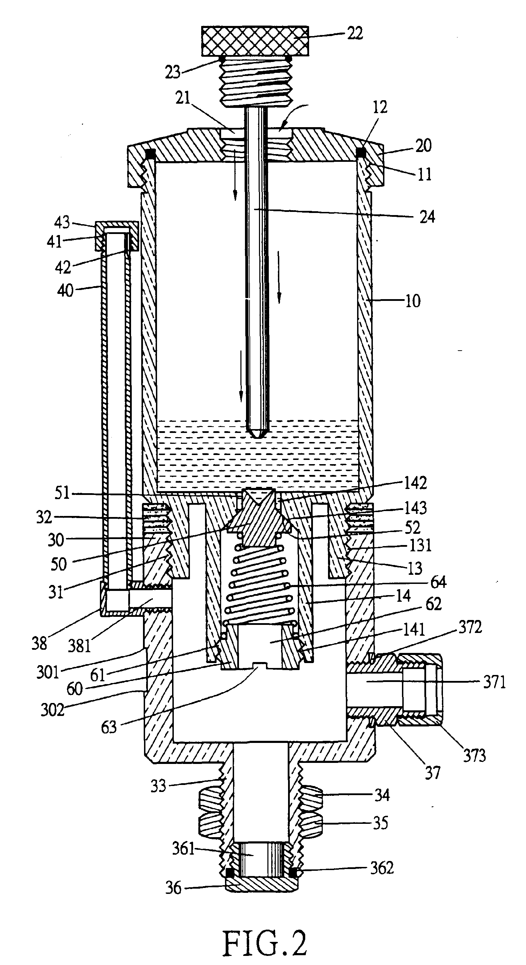

With reference to Fig. 1 and 2, the automatic oil replenishment apparatus of the present invention as illustrated in the drawings comprises generally an oil tank 10, an upper cover 20, an oil distributing case 30, a pressure balance tube 40, a check member 50 and an injecting seat 60.

The oil tank has a hollow interior cylinder body made of rigid transparent material, a first threaded outer periphery 11 adjacent to a first upper opening, a first bottom, a first annular extension 13 of a diameter slightly smaller than that of the cylinder body, extending downward from the bottom, and having a second threaded outer periphery 131 and a second annular extension 14 of a diameter smaller than that of the first annular extension 13 but longer than the first annular extension 13 having a first threaded inner periphery 141 adjacent to a lower opening, a small upper opening 142 communicating with the cylinder body and a taper inner periphery 143 adjacent to the small upper opening 142, and graduations on the outer periphery of the cylinder body for measuring the quantity of the oil.

The cover 20 has a rib reinforced circular body, a downward extending circumferential wall including a threaded inner peripheral wall engageable in the first threaded outer peripheryl 11 of the oil tank 10 as to enable the cover to be fastened to the top of the oil tank 10 with a first sealing ring 12 disposed in between and a threaded central bore 21 enabling a threaded cap 22 to be fastened therein with a second sealing ring 23 disposed in between. The cap 22 includes a third threaded outer periphery engageable in the threaded central bore 21 and an actuating rod 24 of a taper free end centrally extending downward from the bottom of the cap 22.

The injecting seat 60 has an annular body, a fourth threaded outer periphery 61 fastened to the first inner periphery 141 of the second annular extension 14, a central bore 62 and a pair of radial slots 63 symmetrically formed in the lower rim.

The check member 50 has a circular body, a taper upper surface 52 engageable in the taper inner periphery 143 of the second annular extension 14, a first cylinder projection 51 centrally projecting upward including a taper cavity in the top engageable in the taper free end of the actuating rod 24 and a second cylinder projection 53 centrally projecting downward from the underside thereof, in which the upper end of a compression spring 64 is engaged. When the check member 50 is disposed in place in the second annular extension 14, it is biased by the spring 64 so that its taper upper surface 52 tightly engages in the taper inner periphery 143 of the second annular extension 14 to block the small upper opening 142 of the second annular extension 14 (as shown in Fig. 2).

The oil distributing case 30 comprises a hollow interior cylinder body made of rigid transparent material having a wall with an outer diameter equal to that of the oil tank 10 but slightly thicker than the wall of the oil tank 10, a second upper opening, a second bottom, a second threaded inner periphery adjacent to the second upper opening 31 engageable in the second threaded outer periphery 131 of the first annular extension 13, a residues collection tube 33 extending downward from the centre of the second bottom and communicating with the interior of the distributing case 30. The residues collection tube 33 has a fifth threaded outer periphery engaged in a pair of king nuts 34 and 35 which are provided to fasten the apparatus to a flat object of a machine and a third inner threaded periphery adjacent to a lower end being fastened by a bolt 36 with a third sealing 362 disposed in between and a magnet 361 disposed in the tube 33 for facilitating a ready collection of the residues from the oil. A threaded oil egress 371 is formed in a lower peripheral wall of the case 30 by which the oil distributing case 30 is connected to an oil container of a machine through a nipple 37, a fourth sealing ring 372 and a flare nut 373. Further, a threaded air vent 381 is formed in an upper peripheral wall of the case 30 perpendicular to the oil egress 371 into which a threaded elbow 38 is fastened, the elbow including a threaded vertical hole for engaging with the pressure balance tube 40 which has both the upper and lower outer threads for respectively engaging with the elbow 38 and a small nut 43. A pair of vertical slots 41 and 42 is symmetrically formed adjacent to the upper end of tube 40 for facilitating the intake of ambient air of normal atmospheric pressure into the case 30. This arrangement aims to prevent the dirt from coming into the tube 40. The oil distributing case 30 further includes a pair of upper and lower limit lines 301 and 302 on an outer peripheral wall thereof which are provided to control the oil level inside the case 30.

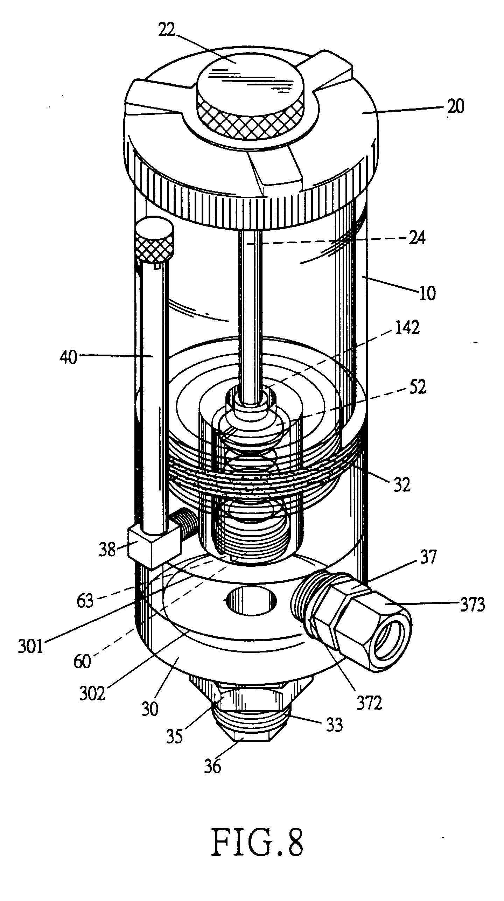

When the oil distributing case 30 is axially connected to the oil tank 10, a predetermined number of the large rubber sealing rings 32 are disposed in between (as shown in Fig. 2). The large rubber seal rings 32 not only prevent the oil from leaking through the gap between the oil tank 10 and oil distributing case 30 but also function to change the distance between the bottoms of the oil tank 10 and the oil distributing case 30. It is otherwise to enlarge or reduce the interior space of the case 30. Figs. 2 and 8 show an assemblage of the preferred embodiment of the present invention while the oil egress 371 is already connected to the oil container of a machine. However, the threaded cap 22 remains unfastened into the threaded central bore 21 as to facilitate feeding the liquid oil into the oil tank 10. The quantity of the oil is controllable by reference to the graduations on the outer peripheral wall of the oil tank.

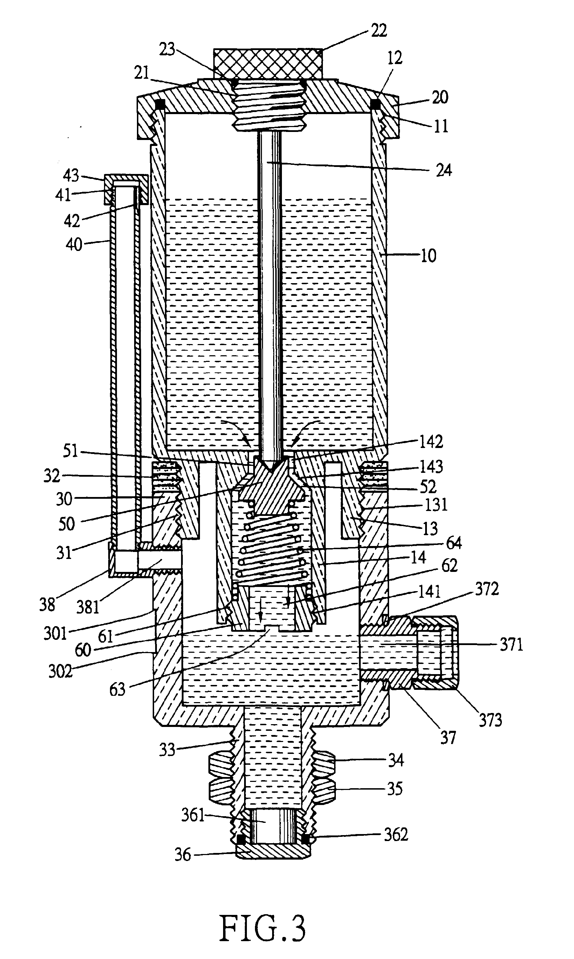

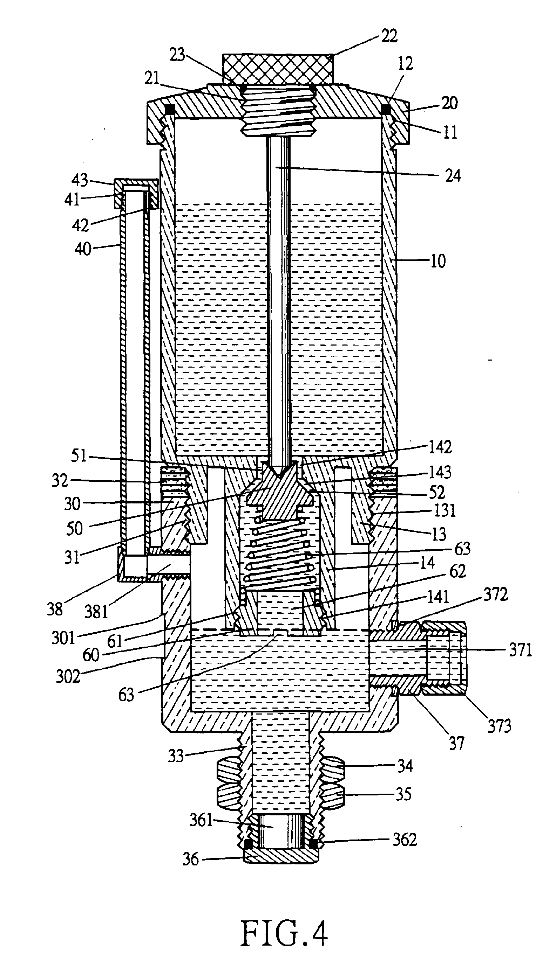

Referring to Fig. 3, when the thread cap 22 is fastened in place into the threaded central bore 21 and, the taper free end of the actuating rod 24 engages in the taper cavity of the first cylinder projection 51 of the check member 50 and urges the check member 50 to move downward so as to form a gap between the check member 50 and second annular extension 14 for permitting the liquid to flow into the oil distributing case 30 through the injecting seat 60. The oil then flows into the container of the machine until the oil level satisfies the requirements of the machine, the remaining oil, inside the oil distributing case 30, rises to the limit line 302 submerging the radial slots 63 of the injecting seat 60. As a result the air from the air vent 381 can not enter the oil tank 10 through those slots 63 and therefore the oil is stopped from flowing into the case 30 again (as shown in Fig. 4). So the pressure in the case 30 is balanced. However, when the oil inside the machine is consumed to a certain limit, the oil distributing case 30 begins to automatically replenish the oil into the container of the machine again. Therefore the oil inside the case 30 drops down to permit the air entering into the oil tank 10 through the radial slots 63 of the injecting seat 60 and the oil from the oil tank 10 flows into the case 30 again until the oil level inside the case 30 reaches the slots 63.

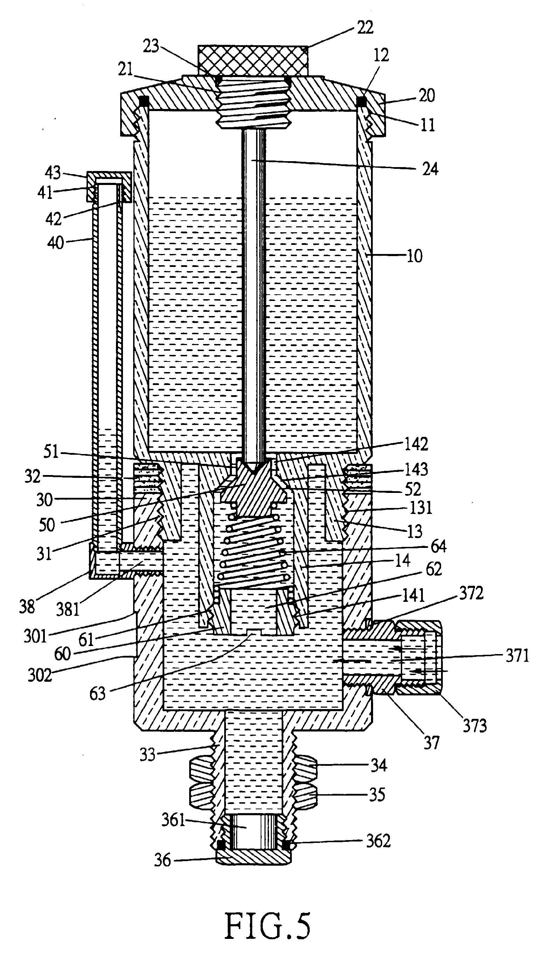

Referring to Fig. 5, in case, the liquid oil flows back to the oil distributing case 30 from the machine caused by a stop of the machine that the pressure suddenly becomes unbalanced, the oil overflows the case 30. This time, the pressure balance tube 40 functions to receive the overflowing oil and prevents the oil from splashing over the ground. When the oil pressure falls back to normal, the pressure balance tube 40 also functions to release the pressure in order to maintain a pressure balance between the case 30 and the machine.

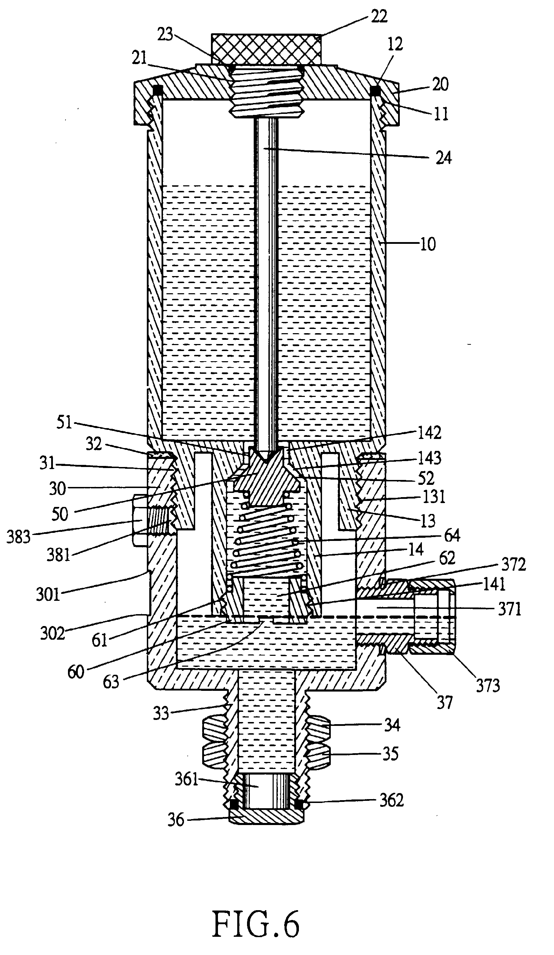

Fig. 6 shows that the automatic oil replenishment apparatus of the present invention is connected to a reciprocating air pressure machine such as a compressor. Such a machine belongs to the sealed off machinery in which the air pressure is different from the outside atmospheric pressure. To cope with such situation the pressure balance tube 40 is removed from case 30 and the air vent is blocked by a bolt 383 and a number of the large rubber sealing ring is removed from between the oil tank 10 and the case 30 in order to lift up the bottom of the case 30 to keep the oil inside the case 30 submerging the radial slots 63 of the injecting seat 60. So the pressure between the case 30 and the machine will be balanced.

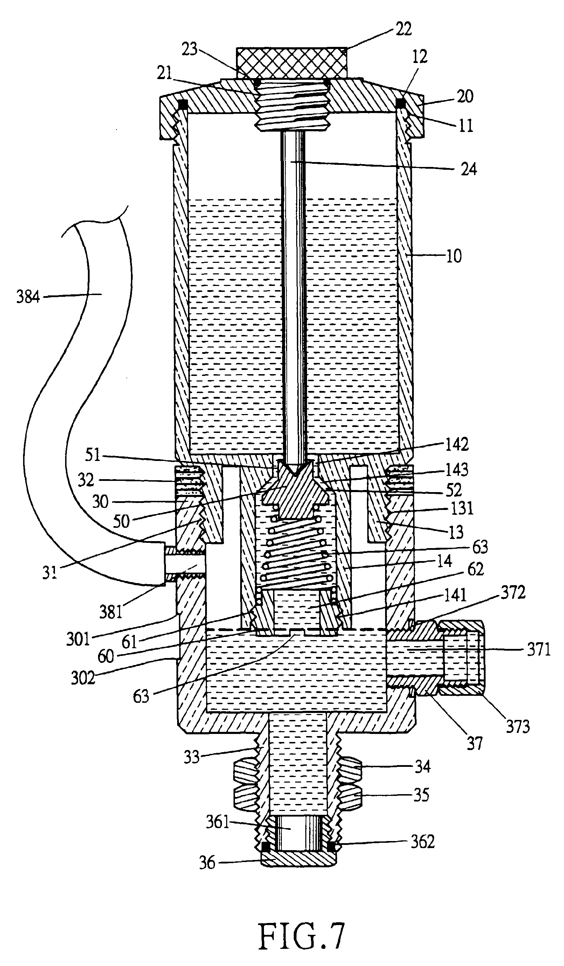

Referring to Fig. 7, the automatic oil replenishment apparatus is connected to a deceleration gear box. As the balance tube is incapable of receiving such a great quantity of overflowed oil from this machine, the pressure balance tube 40 is removed and instead of it a flexible tube 384 is connected to the air vent 381 and an oil inlet of the machine. So, if oil overflows, it will flow back into the machine through the flexible tube 384.

Further, the magnet 361 disposed inside the residues collection tube 33 facilitates the collection of the residues from the oil. If the oil is found impure in the tube 33, then bolt 36 is unfastened to release the impure oil and to clean the magnet 361. Then, after the magnet 361 is disposed into the tube 33 again, the bolt 36 is fastened. This process is very easy to do.

Accordingly, the automatic oil replenishment apparatus of the present invention provides the following advantages:
a) the oil is automatically replenished into the machine without manual operation or stopping the operation of the machine,
b) the pressure balance tube provides the apparatus the capability to serve for the sealed off or opening machinery,
c) both the oil tank and the oil distributing case are made of rigid transparent materials in addition to the graduations and the limit line on their outer peripheral walls. Therefore, the quantity of the oil is controllable and the impurities and the residues in the oil are visible and releasable, so as to prolong the service life of the machines, and
d) the adjustment of the instance between the bottoms of the oil tank and the oil distributing case can provide a standard oil level in the machine.

## Claims

1. An apparatus for automatically replenishing liquid oil into a machine comprising
- an oil tank (10) of a hollow interior cylinder body having a bottom and a cover (20),
- a cap (22) engageable in a central bore (21) in the cover and comprising an actuating rod (24) with a tapered free end centrally extending downward,
- an annular extension (14) of a diameter smaller than the diameter of the oil distributing case (30) extending downwards from the bottom and comprising a tapered inner periphery (143) at the upper end surrounding a small upper opening (142), the opening communicating with the interior of the cylinder body,
- an injection seat (60) having an annular body and being fixed and sealed at its periphery to the lower end of the annular extension (14), a central bore (62) and a pair of radial slots (63) symmetrically formed in the lower rim,
- a check member (50) being biased by a compression spring (64) which is disposed on top of the injection seat, the check member having a circular body (52), fitting into the tapered inner periphery (143), a first cylinder projection (51) centrally extending upward, fitting into the small upper opening (142) and including a tapered cavity engageable in the taper free end of the actuating rod (24) and a second cylinder projection (53) centrally projecting downward and being engageable in the upper end of the compression spring (64), so that when the cover (20) is fastened in place the check member (50) is forced down by the actuating rod (24) against the force of the spring (64) to such an extend that a gap is formed between the check member (50) and the tapered inner periphery (143) and
- an oil distributing case (30) being fixed to the bottom of the oil tank and comprising a hollow interior cylinder body accommodating the annular extension (14), the case (30) further comprising an air vent (381) at an upper position of the wall of case (30) and an oil egress (371) at a lower position of the wall of case (30).

2. An apparatus according to claim 1 characterised in that the cylinder bodies of the oil tank (10) and the oil distributing case (20) are made of a rigid transparent material, the outer peripheral wall of the oil tank (10) comprises graduations and the outer peripheral wall of the case (30) comprises upper and lower limit lines transversely formed in the wall.

3. An apparatus according to claim 1 or 2 characterised in that the cover (20) is an extra part which is fastened on a first upper opening of the cylinder body of the oil tank (10), the cover (20) having a rib reinforced circular body, a downward extending circumferential wall including a threaded inner periphery engaged in a threaded outer periphery (11) of the cylinder body.

4. An apparatus according to one of the preceding claims characterised in that the oil distributing case (30) is fastened to the oil tank (10) with a selective number of rubber sealing rings (32) disposed in between defining the distance between the bottom of the oil tank (10) and the bottom of the oil distributing case (30).

5. An apparatus according to one of the preceding claims characterised in that the oil tank (10) comprises an annular extension of a diameter slightly smaller than that of the cylinder body of the oil tank (10), the annular extension being wider but shorter than the extension (14), extending downward from the bottom of the oil tank (10) and comprising a threaded outer periphery (131) engageable in a threaded inner periphery (31) of the case (30).

6. An apparatus according to one of the preceding claims characterised in that a residues collection tube (33) is centrally extending downward from the bottom of the oil distributing case (30) in communication with the hollow interior of the case (30), the tube (33) comprising a lockable outlet at its lower end and a magnet (361) disposed in the tube.

7. An apparatus according to one of the preceding claims characterised in that a pressure balance tube (40) is vertically fastened to the air vent and comprises openings (42) for pressure compensation at its upper end.

8. An apparatus according to one of claims 1 to 6 characterised in that the air vent (381) is blocked by a bolt (383) when the apparatus serves for a reciprocating air pressure machine.

9. An apparatus according to one of claims 1 to 6 characterised in that it further includes a hole connecting the air vent (381) and an oil inlet of the machine when said apparatus serves for a deceleration gear box.
